# EUROPÄISCHE PATENTSCHRIFT

(11) **EP 0 358 223 B1**
(45) Veröffentlichungstag und Bekanntmachung des Hinweises auf die Patenterteilung: **08.12.1993**
(21) Anmeldenummer: 89116649.8
(22) Anmeldetag: 08.09.1989
(51) Int. Cl.: F16B 13/02, F16B 12/04

(54) **Verbindungselement, insbesondere Dübel**
Connection element, especially a dowel
Elément de connection notamment cheville

(30) Priorität: 09.09.1988 DE 3830770; 02.02.1989 DE 3903146
(43) Veröffentlichungstag der Anmeldung: 14.03.1990
(73) Patentinhaber: Astl, Arno, A-6345 Kössen (AT); Astl, Tasso, A-6345 Kössen (AT)
(72) Erfinder: Astl, Arno, A-6345 Kössen (AT)
(74) Vertreter: Klingseisen, Franz, Dipl.-Ing.

(56) Entgegenhaltungen:
- CH-A- 555 009
- DE-A- 3 119 041
- DE-A- 3 309 954
- US-A- 4 454 699

## Beschreibung

Die Erfindung betrifft ein Verbindungselement, insbesondere einen Dübel, nach dem Oberbegriff des Anspruchs 1.

Aus DE-A-3-309 954 ist ein Dübel zum Verbinden von Möbelteilen bekannt, der so ausgelegt ist, daß sich das in das Bohrloch eingebrachte Klebemittel nahezu gleichmäßig über die Lange des eingeführten Dübels verteilt. Der Dübel weist sägezahnförmige Rippen auf, die aber keine nennenswerte Haltefunktion haben, diese wird durch das Klebemittel erreicht.

Der Erfindung liegt die Aufgabe zugrunde, ein Verbindungselement dieser Art so auszubilden, daß es einfach hergestellt und verarbeitet werden kann und zudem eine sehr hohe Haltewirkung erzielt wird.

Diese Aufgabe wird erfindungsgemäß durch die Merkmale im Kennzeichen des Anspruchs 1 gelöst. Beim Einschlagen eines solchen Dübels in eine Bohrung werden die radial äußeren Bereiche der Vorsprünge zunächst elastisch und danach bei stärkerer Krafteinwirkung wenigstens teilweise plastisch verformt, wobei durch das radial weiter innen liegende Material der Vorsprünge ein Abstützeffekt ausgeübt wird, so daß auch bei plastischer Verformung der radial äußeren Bereiche noch eine elastische Wirkung radial nach außen durch diesen Abstützeffekt erhalten bleibt. Hierdurch ergibt sich eine außerordentlich gute Haltewirkung, wie Versuche ergeben haben. Auch können Toleranzen bei der Bohrungsauslegung in einem gewissen Bereich ausgeglichen werden. Ein Dübel dieser Art kann durch Spritzgießen, Pressen oder Extrudieren in einfacher Weise hergestellt und durch Einschlagen ohne Leim einfach verarbeitet werden.

Vorteilhafte Ausgestaltungen der Erfindung sind in der nachfolgenden Beschreibung und in den weiteren Ansprüchen angegeben.

Beispielsweise Ausführungsformen der Erfindung werden nachfolgend anhand der Zeichnung näher erläutert. Es zeigen
- Fig. 1: in einem Längsschnitt einen Dübel mit gleichförmigen, in beiden Einschlagrichtungen symmetrischen Vorsprüngen,
- Fig. 2: in vergrößerter Darstellung einen der Vorsprünge im Querschnitt,
- Fig. 3: in einem Längsschnitt einen einseitig in eine Bohrung eingeschlagenen Dübel,
- Fig. 4: in einem Längsschnitt einen Dübel im eingeschlagenen Zustand zur Verbindung zweier Spanplatten, und
- Fig. 5: verschiedene Ausführungsformen der Querschnittsform der Vorsprünge.

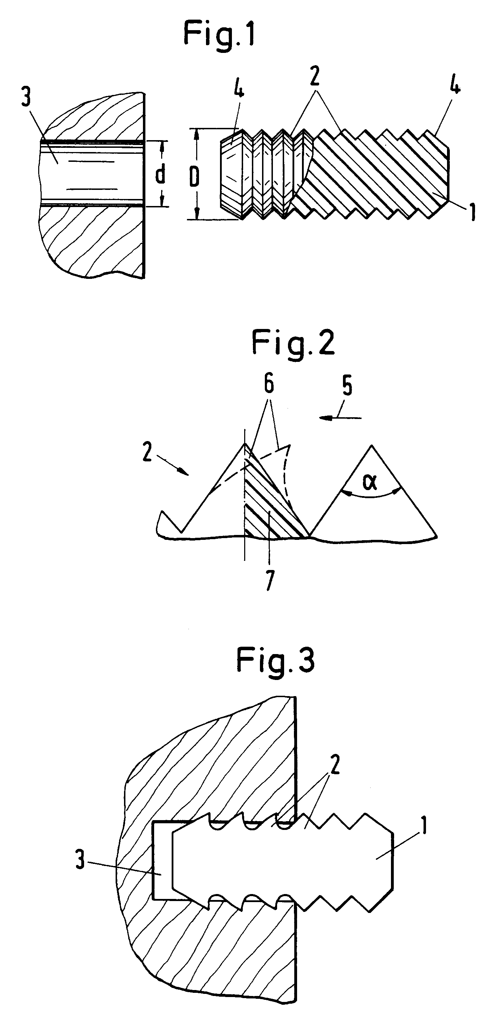

In Fig. 1 ist ein zylindrischer Dübel 1 aus Kunststoffmaterial wiedergegeben, auf dessen Außenumfang über die Länge des Dübels ringförmige oder schraubenlinienförmige Vorsprünge 2 ausgebildet sind. Diese Vorsprünge haben im Querschnitt eine in Einschlagrichtung des Dübels symmetrische Querschnittsform nach Art eines gleichseitigen Dreiecks, d.h. die Flanken der Vorsprünge haben in beiden Richtungen den gleichen Neigungswinkel, so daß der Dübel 1 unabhängig von der Eindringtiefe sowohl in der einen als auch in der anderen Richtung in eine Bohrung 3 eingeschlagen werden kann. Der Außendurchmesser D des Dübels mit Vorsprüngen 2 ist etwas größer als der Durchmesser d der Bohrung 3 in dem zugeordneten Holz- oder Kunststoffteil. Das Übermaß des Dübels relativ zur Bohrung ist kleiner als 2 mm, vorzugsweise kleiner 1 mm und liegt insbesondere zwischen 0,2 und 0,6 mm. Vorzugsweise sind die Enden des Dübels 1 bei 4 kegelstumpfförmig angefast, um das Einsetzen in die Bohrung 3 zu erleichtern.

Der Dübel 1 wird durch Pressen, Spritzgießen oder dergleichen einstückig aus einem Kunststoffmaterial hergestellt, das dem Dübel in Einschlagrichtung eine hohe Steifigkeit verleiht, wobei jedoch die äußeren Bereiche der Vorsprünge 2 zunächst elastisch und bei stärkerer Krafteinwirkung plastisch verformbar sind.

Das Material des Dübels hat einen E-Modul von 500 bis 15.000 N/mm², vorzugsweise von 1.000 bis 10.000 und insbesondere von 1.500 bis 5.000 N/mm². Die Dehnung bis zum Fließen bzw. bis zur plastischen Verformung ist kleiner 20%, vorzugsweise kleiner 10% und insbesondere etwa 3 bis 8%. In diesem Bereich erfolgt eine elastische Verformung, darüber hinaus eine plastische Verformung. Vorzugsweise werden Thermoplaste für die Herstellung des Dübels verwendet, deren Elastizität unter 10% liegt, wobei bei einer Formänderung über 10% eine plastische Verformung über einen größeren Dehnungsbereich, beispielsweise bis 120% Dehnung auftritt. Beispielsweise kann ein Polycarbonat mit einer Elastizität bzw. Dehnung bis zum Fließen von 6 bis 7%, einem Bereich der plastischen Verformung bis etwa 80 bis 120% Dehnung und einem E-Modul von ca. 2.300 N/mm² verwendet werden. Die Zugfestigkeit eines derartigen Materials liegt bei 60 N/mm².

Fig. 2 zeigt im Querschnitt einen einzelnen Vorsprung 2 in Form eines gleichseitigen Dreiecks, wobei die Einschlagrichtung durch einen Pfeil 5 angegeben ist. Im radial äußeren Bereich bei 6 kann der Vorsprung 2 aufgrund der geringeren Materialstärke leicht elastisch und bei stärkerer Krafteinwirkung plastisch verformt werden, wie durch gestrichelte Linien angedeutet, wobei der breitere Basisbereich eine elastische Abstützung bildet.

Insbesondere trägt der in Fig. 2 schraffiert dargestellte, hintere Querschnittsbereich 7, begrenzt durch die Senkrechte von der radial äußeren Stelle des Vorsprungs auf die Achse und dessen hinterer Flanke, zur Abstützung bei, wobei durch Vergrößerung oder Verkleinerung dieser Fläche 7 der Abstützeffekt beeinflußt werden kann. Die in Fig. 2 schraffierte Fläche 7 sollte über 20%, vorzugsweise über 30%, mindestens aber 10% der Querschnittsfläche des Vorsprungs 2 betragen. Selbst wenn der äußere Bereich 6, wie durch gestrichelte Linien dargestellt, bereits plastisch verformt ist, bildet der untere Bereich der schraffierten Fläche 7 noch eine elastische Abstützung, durch die der äußere Bereich 6 auch bei plastischer Verformung noch zurückfedern kann.

Der in Fig. 2 angegebene Winkel α zwischen den beiden Flanken an der Spitze bzw. an dem radial außen liegenden Bereich 6 eines Vorsprungs 2 ist größer als 60°, vorzugsweise größer 70° und insbesondere größer 80°, insbesondere bei einer ring- oder schraubenförmigen Ausgestaltung der Vorsprünge 2. Der Abstand zwischen den Spitzen der einzelnen Vorsprünge 2 in Achsrichtung des Dübels beträgt ca. 1,5 bis 0,5 mm. Bei einem praktischen Ausführungsbeispiel sind auf einer Dübellänge von 20 mm etwa 20 Vorsprünge 2 angeordnet.

Fig. 3 zeigt einen in eine Bohrung eingeschlagenen Dübel mit entsprechend verformten Vorsprüngen 2. Versuche haben gezeigt, daß beim Einschlagen des Dübels in die Bohrung einer Spanplatte oder Holzteil das Holzmaterial die Ausnehmungen zwischen den einzelnen Vorsprüngen 2 im wesentlichen vollständig ausfüllt und die Vorsprünge 2 widerhakenähnlich in das Holzmaterial eingreifen, wie dies Fig. 3 schematisch zeigt.

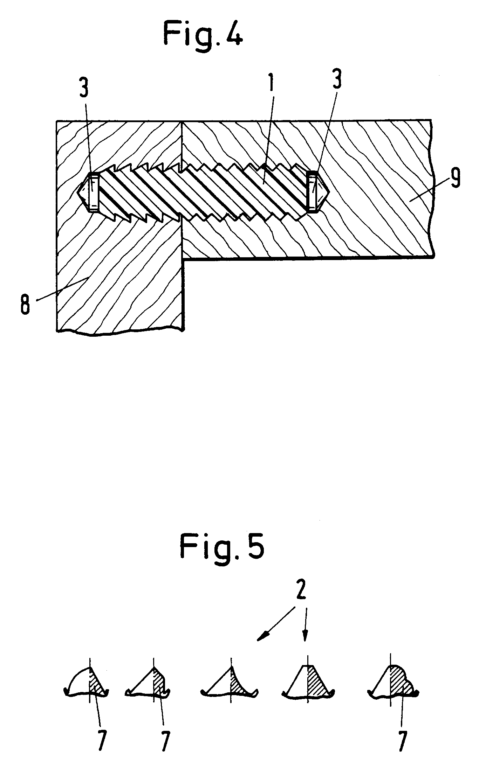

Fig. 4 zeigt einen in zwei senkrecht zueinander liegende Spanplatten eingeschlagenen Dübel. Bei derartigen Spanplatten, wie sie in der Möbelindustrie verwendet werden, liegen die dichteren und härteren äußeren Schichten der einen Spanplatte 8 quer zur Bohrung 3 bzw. zur Einschlagrichtung des Dübels, während bei der Spanplatte 9 die Bohrung im nachgiebigeren, weicheren Bereich in der Mitte der Stirnseite eingebracht ist. Beim Verbinden der beiden Spanplatten 8, 9 wird der Dübel 1 vorteilhafterweise zunächst in das härtere Holzteil 8 eingeschlagen oder eingeschossen, wobei die vorderen Vorsprünge 2 durch das harte Material stärker verformt werden als die folgenden Vorsprünge, wie dies in Fig. 4 angedeutet ist. Da das Holzmaterial eine gewisse Eigenelastizität hat, federt es nach dem Einschlagen des Dübels zurück und dringt in die Zwischenräume zwischen den Vorsprüngen 2 ein, so daß sich eine gute Haltewirkung ergibt. Beim Einschlagen werden die Vorsprünge gegen die Auszugsrichtung verformt, so daß sie Widerhaken bilden. Danach wird der aus dem Holzteil 8 vorstehende Teil des Dübels in das weichere Holzteil 9 eingedrückt oder eingeschlagen, wobei wegen des nachgiebigeren Materials keine so starke Verformung der Vorsprünge 2 erfolgt. Auch in diesem Fall federt das Holzmaterial zurück, so daß es zwischen die Vorsprünge 2 eingreift. Beim Einschlagen des Dübels in das Holzteil 9 ist eine geringere Kraft erforderlich als beim Einschlagen in das härtere Holzteil 8. Um eine fugendichte Verbindung zwischen den beiden Holzteilen 8, 9 zu erhalten, werden die Holzteile verstärkt zusammengepreßt, um die Elastizität des Holzes auszunutzen. Hierdurch wird vermieden, daß durch geringes Zurückfedern des Dübels nach dem Einschlagen die zunächst dichte Fuge sich wieder öffnen kann.

Während der Dübel nach den Fig. 1 und 4 einen Vollquerschnitt aufweist, ist auch ein Hohlquerschnitt des Dübels möglich. Beispielsweise kann ein Dübel mit Vollquerschnitt im Mittelbereich und nach außen sich erweiternden Hohlräumen vorgesehen werden. Hierdurch wird erreicht, daß an den dünnwandigeren Endabschnitten des Dübels eine gewisse Elastizität in radialer Richtung erzielt wird, die beim Einschlagen des Dübels in eine Bohrung zunächst zu einer geringfügigen Kontraktion und nach dem Einschlagen zu einem radialen Zurückfedern führt. Dies kann auch durch Längsschlitze an einem durchgehend hohlen Dübel erzielt werden.

Anstelle der ringförmigen oder schraubenlinienförmigen Vorsprünge 2 können auch teilweise sich über den Umfang erstreckende Vorsprünge oder einzelne über den Umfang verteilte Vorsprünge vorgesehen werden, beispielsweise in Kegelform, Pyramidenform oder dergleichen, wobei derartige einzelne Vorsprünge ungleichmäßig über den Umfang verteilt oder auch in Reihen angeordnet sein können.

Die Höhe der Vorsprünge 2 ist zweckmäßigerweise kleiner 2 mm, vorzugsweise kleiner 1 mm und liegt insbesondere zwischen 0,2 und 0,6 mm bei einem Dübeldurchmesser von ca. 1 cm.

Fig. 5 zeigt verschiedene beispielsweise Querschnittsformen von Vorsprüngen 2, wobei der für den Abstützeffekt wesentliche Abschnitt 7 jeweils schraffiert angedeutet ist. Die Flanken der Vorsprünge 2 können konvex oder konkav gewölbt sein und es kann auch der radial außen liegende Endbereich 6 abgeflacht oder abgerundet sein.

Es können auch über die Dübellänge unterschiedlich geformte Vorsprünge vorgesehen werden, beispielsweise an den Endabschnitten Vorsprünge mit einem geringeren Abstützbereich, also einer steileren Flanke als der in Einschlagrichtung vorne liegenden Flanke, während im Mittelbereich des Dübels Vorsprünge 2 mit einer Querschnittsform nach Art eines gleichseitigen Dreiecks vorgesehen werden, die wegen der größeren Abstützfläche steifer sind. Dabei können die Vorsprünge über die Länge des Dübels die gleiche Höhe haben. Es ist aber auch möglich, zur Mitte hin weiter radial nach außen vorstehende Vorsprünge vorzusehen.

Zweckmäßigerweise können die Vorsprünge 2 durch Gewindeabschnitte ausgebildet werden, wobei sich ein Gewindeabschnitt auf einer Hälfte des Umfangs des Dübels und der andere Gewindeabschnitt auf der anderen Hälfte des Umfangs versetzt und/oder gegenläufig zu dem ersteren erstreckt, so daß an den Dübelenden eine im wesentlichen gleichmäßige Angriffsfläche vorhanden ist.

In Längsrichtung des Dübels können auf dem Außenumfang radial abstehende Rippen zur Führung des Dübels vorgesehen werden. Ebenso können in Längsrichtung Nuten auf dem Umfang des Dübels ausgebildet sein, so daß an der Stelle dieser Nuten ein Materialfluß möglich ist. Zugleich kann durch derartige Nuten Luft beim Einschlagen des Dübels entweichen, damit ein Komprimieren der Luft in der Bohrung beim Einschlagen des Dübels vermieden wird.

Nach einer anderen Ausgestaltung kann der Kerndurchmesser eines zylindrischen Dübels, beispielsweise von der Mitte aus in Richtung auf die beiden Enden kleiner werdend ausgebildet werden, während der Außendurchmesser D des Dübels über die Länge gleichbleibt, so daß im mittleren Bereich des Dübels kürzere und damit steifere Vorsprünge vorgesehen sind als im Bereich der Endabschnitte des Dübels. Auch in diesem Fall kann der Dübel einen Vollquerschnitt über die Länge haben oder mit in Längsrichtung verlaufenden Hohlräumen oder Einschnitten versehen sein.

Es ist auch möglich, zur Ausbildung des Dübels einen Metallkern mit Kunststoff zu umspritzen. Hierdurch kann der Dübel in Einschlagrichtung steif ausgebildet werden, während durch das um den Metallkern gespritzte Kunststoffmaterial eine wenigstens teilweise plastische Verformung an den Vorsprüngen zuläßt.

Der Dübel kann einen Abschnitt mit größerem und einen Abschnitt mit kleinerem Durchmesser aufweisen, damit beim Einschlagen des Abschnitts mit kleinerem Durchmesser ein Anschlag vorhanden ist. Zur Ausbildung eines nur einseitig als Befestigungselement zu verwendenden Dübels kann am Dübelende ein Flansch oder ein anderes Teil angebracht sein, das beim Einschlagen des Dübels in die Bohrung zugleich als Anschlag dient. Ein derartiges, am Dübelende angebrachtes Teil kann ein Beschlagteil sein, wie es in der Möbelindustrie verwendet wird.

Bei der Herstellung einer Eckverbindung zwischen zwei Spanplatten 8, 9 nach Fig. 3 wird beim Einschlagen des Dübels in die flache Seite der Spanplatte 8 zweckmäßigerweise ein Anschlag bzw. ein Distanzstück neben die Bohrung gelegt und der Dübel bis auf die Höhe dieses Anschlags in die Bohrung eingeschlagen, worauf der verbleibende Abschnitt des Dübels in die Stirnseite der Spanplatte 9 eingeschlagen werden kann.

Es ist auch möglich, den Dübel zunächst in eine Bohrung in der weicheren Stirnseite der Spanplatte 9 einzuleimen und, nachdem der Leim gehärtet ist, den Dübel in eine Bohrung in der festeren Fläche der Spanplatte 8 ohne Leimzugabe einzuschlagen. In einem solchen Falle werden am Vorderende des Dübels zweckmäßigerweise Ausnehmungen oder Rillen vorgesehen, die zur Aufnahme von überschüssigem Leim dienen.

Anstelle eines zylindrischen Dübels kann auch ein z.B. abgewinkeltes oder ebenes plattenförmiges oder auch in anderer Weise geformtes Verbindungselement vorgesehen werden, wobei mindestens auf einem bestimmten Bereich der Außenfläche Vorsprünge der beschriebenen Art ausgebildet sind. Das beschriebene Verbindungselement wird insbesondere für Spanplatten und andere Holzteile vorgesehen, es ist aber auch möglich, Kunststoffteile oder dergleichen miteinander zu verbinden.

## Patentansprüche

1. Verbindungselement, insbesondere Dübel, für Holz- und Kunststoffteile, insbesondere für Spanplatten, mit auf den Außenflächen des VerbindungselementeS quer zur Längsrichtung rippenförmig vorstehenden Vorsprüngen (2), die auf der in Einschlagrichtung vorderen Seite eine schräge Flanke aufweisen,
**dadurch gekennzeichnet**,
daß das Verbindungselement (1) in Einschlagrichtung im wesentlichen steif ist, während die Vorsprünge (2) zunächst elastisch und danach bei stärkerer Krafteinwirkung plastisch verformbar sind,
daß die Vorsprünge (2) auf der in Einschlagrichtung hinteren Seite zur Ausbildung eines Abstützeffektes eine entgegen der vorderen Flanke geneigte Flanke aufweisen,
daß die zwischen hinterer Flanke und der Senkrechten von der radial äußersten Stelle des Vorsprungs (2) gebildete Querschnittsfläche (7) wenigstens 10 % der gesamten Querschnittsfläche des Vorsprungs beträgt, und
daß der Winkel zwischen den beiden Flanken an dem radial außen liegenden Bereich (6) eines Vorsprungs (2) größer als 60° ist.

2. Verbindungselement nach Anspruch 1,
dadurch gekennzeichnet,
daß die Vorsprünge (2) die Querschnittsform eines gleichseitigen Dreiecks aufweisen.

3. Verbindungselement nach den Ansprüchen 1 und 2,
dadurch gekennzeichnet,
daß das Verbindungselement aus einem Kunststoffmaterial mit einem E-Modul von 500 bis 15.000, vorzugsweise 1.000 bis 5.000 N/mm², insbesondere 1.500 bis 3.000 N/mm² besteht.

4. Verbindungselement nach den vorhergehenden Ansprüchen,
dadurch gekennzeichnet,
daß das Material bei einer Dehnung kleiner 20%, vorzugsweise kleiner 10% elastisch verformbar und bei einer stärkeren Dehnung plastisch verformbar ist.

5. Verbindungslement nach den vorhergehenden Ansprüchen,
dadurch gekennzeichnet,
daß wenigstens über einen Längsabschnitt des Verbindungselementes (1) auf dessen Umfang in Längsrichtung verlaufende Rillen und/oder Erhebungen ausgebildet sind.

6. Verbindungselement nach den vorhergehenden Ansprüchen,
dadurch gekennzeichnet,
daß wenigstens über einen Teil der Längsabmessung des Verbindungselementes in Einschlagrichtung Hohlräume oder Ausnehmungen zur Ausbildung einer Nachgiebigkeit quer zur Einschlagrichtung ausgebildet sind.

7. Verfahren zum Verbinden von senkrecht zueinander liegenden Spanplatten bzw. plattenförmigen Holzteilen durch ein Verbindungselement nach den vorhergehenden Ansprüchen,
dadurch gekennzeichnet,
daß das Verbindungslement (1) zunächst in eine Bohrung auf der flachen Seite einer Spanplatte (8) bzw. einer Massivholzplatte quer zur Faserung eingeschlagen und danach der vorstehende Abschnitt des Verbindungselementes in eine Bohrung in der Stirnseite des anderen plattenförmigen Holzteiles (9) eingeschlagen wird.

## Claims

1. Connecting element, particularly a dowel, for connecting wooden and plastics parts, more particularly for connecting chipboards, having rib-like projections (2) on the outer surfaces of the connecting element, transverse with respect to the longitudinal direction, said projections having an inclined flank on that side which is at the front in the direction of insertion, characterised in that the connecting element (1) is substantially rigid in the direction of insertion, whilst the projections (2) are initially elastically deformable and, subsequently, as stronger forces are exerted, plastically deformable, in that the projections (2) have a flank which is inclined towards the front flank, on the side which is at the back in the direction of insertion, in order to produce a support, in that the cross-sectional area (7) formed between the rear flank and the perpendicular lines of the radially outermost point of the projection (2) makes up at least 10% of the entire cross-sectional area of the projection, and in that the angle between the two flanks at the radially outer region (6) of a projection (2) is greater than 60°.

2. Connecting element according to claim 1, characterized in that the projections (2) are in the form of an equilateral triangle in cross-section.

3. Connecting element according to claims 1 and 2, characterized in that the connecting element consists of a plastics material having a modulus of elasticity of 500 to 15,000, preferably 1,000 to 5,000 N/mm², more particularly 1,500 to 3,000 N/mm².

4. Connecting element according to the preceding claims, characterized in that the material is elastically deformable when subjected to an expansion of less than 20% and preferably less than 10% and is plastically deformable when expanded to a greater extent.

5. Connecting element according to the preceding claims, characterized in that grooves and/or elevations are formed over at least part of the length of the connecting element (1) so as to extend over the circumference thereof in the longitudinal direction.

6. Connecting element according to the preceding claims, characterised in that cavities or recesses are formed over at least part of the longitudinal dimension of the connecting element in the direction of insertion, so as to produce a ductility at right angles to the direction of insertion.

7. Method of connecting chipboards or wooden components in sheet form located perpendicularly to one another by means of a connecting element according to the preceding claims, characterised in that the connecting element (1) is first inserted in a bore on the flat side of a chipboard (8) or a solid wood board at right angles to the grain and then the projecting portion of the connecting element is inserted in a bore in the end face of the other wooden component (9) in sheet form.

## Revendications

1. Elément de liaison, notamment cheville destinée à des éléments en bois et en matière synthétique, en particulier pour des panneaux d'agglomérés, avec sur les faces extérieures de l'élement de liaison des saillies (2) formant des protubérances nervurées transversalement à la direction longitudinale, qui présentent un flanc oblique sur le côté avant dans la direction de la trame,
caractérisé en ce que
l'élément de liaison (1) est sensiblement rigide dans la direction de la trame, tandis que les saillies (2) sont dans un premier temps déformables élastiquement puis sous l'effet d'une force plus importante déformables plastiquement,
en ce que les saillies (2) sur le côté arrière dans la direction de la trame présentent pour réaliser un effet d'appui un flanc incliné en opposition au flanc avant,
en ce que la face de section transversale (7) formée entre le flanc arrière et la verticale de l'emplacement radialement le plus extérieur de la saillie (2) représente au moins 10 % de la surface de section transversale de la saillie, et
en ce que l'angle entre les deux flancs sur la zone située radialement à l'extérieur (6) d'une saillie (2) est supérieur à 60°.

2. Elément de liaison selon la revendication 1, caractérisé en ce que
les saillies (2) présentent la forme de section transversale d'un triangle équilatéral.

3. Elément de liaison selon les revendications 1 et 2, caractérisé en ce que
l'élément de liaison consiste en une matière synthétique ayant un module d'élasticité de 500 à 15.000, de préférence de 1000 à 5000 N/mm², en particulier de 1500 à 3000 N/mm².

4. Elément de liaison selon les revendications précédentes, caractérisé en ce que
la matière est déformable élastiquement sous un allongement inférieur à 20 5, de préférence inférieur à 10 % et en ce qu'elle est déformable plastiquement sous l'effet d'un allongement supérieur.

5. Elément de liaison selon les revendications précédentes, caractérisé en ce que
des sillons et/ou des reliefs sont formés au moins sur une section longitudinale de l'élément de liaison (1) sur sa périphérie et s'étendant dans la direction longitudinale.

6. Elément de liaison selon les revendications précédentes, caractérisé en ce que
des zones creuses sont formées au moins sur une partie de la dimension longitudinale de l'élément de liaison dans la direction de la trame ou des évidements pour former une élasticité transversalement à la direction de trame.

7. Procédé pour relier ou raccorder des panneaux d'agglomérés juxtaposés verticalement ou des éléments en bois en forme de plaques ou panneaux juxtaposés verticalement par un élément de liaison ou de raccordement selon les revendications précédentes, caractérisé en ce que
l'élément de liaison (1) est d'abord enfoncé dans un alésage sur le côté plat d'un panneau d'agglomérés (8) ou d'une plaque ou d'un panneau en bois massif transversalement aux fibres et ensuite la section en saillie de l'élément de liaison est enfoncée dans un alésage du côté frontal de l'autre élément en bois en forme de plaque (9).
